# EUROPEAN PATENT SPECIFICATION

(11) **EP 1 748 942 B1**
(45) Date of publication and mention of the grant of the patent: **28.10.2009**
(21) Application number: 05740261.2
(22) Date of filing: 04.05.2005
(51) Int. Cl.: B65G 29/00, B65G 47/31, B65B 19/22

(54) **WRAPPING METHOD AND DRUM FOR PRODUCTS IN A PACKING MACHINE**
EINWICKELVERFAHREN UND TROMMEL FÜR PRODUKTE IN EINER VERPACKUNGSMASCHINE
PROCEDE ET TAMBOUR D'EMBALLAGE DE PRODUITS POUR MACHINE DE CONDITIONNEMENT

(30) Priority: 05.05.2004 IT BO20040287
(43) Date of publication of application: 07.02.2007
(73) Proprietor: G.D Societa' per Azioni, 40133 Bologna (IT)
(72) Inventor: BIONDI, Andrea, 40133 Bologna (IT)
(74) Representative: Jorio, Paolo
(86) International application number: PCT/EP2005/052062
(87) International publication number: WO 2005/105625

(56) References cited:
- DE-A1- 3 042 377
- DE-A1- 19 917 435
- US-A- 6 112 880
- US-B1- 6 612 094

## Description

### TECHNICAL FIELD

The present invention relates to a wrapping method and drum for products in a packing machine, according to the preamble of claims 1 and 7 respectively and as disclosed in US 6 612 094 B1.

Though suitable for dealing with any type of product, in particular a substantially parallelepiped-shaped product, the present invention may be used to advantage in the tobacco industry for dealing with packets of cigarettes along a wrapping path of a cigarette packing machine, to which the following description refers purely by way of example.

### BACKGROUND ART

Cigarette packing machines are known to employ at least one conveyor drum having a number of peripheral radial seats for housing respective packets, and which are integral with one another and equally spaced about an axis of rotation of the conveyor drum. In actual use, the conveyor drum is operated to move the seats in a succession of equal steps along a circular path coaxial with said axis of rotation and normally extending through a feed station, an unloading station, and one or more work stations, at which some wrapping operations are carried out.

Using conveyor drums of the above type on cigarette packing machines poses various drawbacks, on account of the high output rate of machines of this sort, which, in the most advanced models, is as high as 7-10 packets a second, and which subjects the peripheral radial seats, at each step, to severe acceleration and deceleration, in turn resulting in severe inertial stress on the drum structure, and in impaired reliability of the conveyor drum.

US6612094B1 discloses a wrapping apparatus for folding a wrapper blank around a group of cigarettes. The wrapping apparatus includes a wrapper blank former which simultaneously folds sides and ends of a blank by plunging the former around an article holder and subsequently plunging the article from the holder into the former; folding operations may be performed during transfer to or from a pivotable holder, particularly in a radial direction of the drum.

DE19917435A1 discloses a method for transfer of tablets, capsules and similar goods from a container into the cups of a moving foil strip; the method involves the use of two segments which have goods receptacles and are fixed respectively to outer and inner coaxial shafts driven by controllable drives.

### DISCLOSURE OF INVENTION

It is an object of the present invention to provide a wrapping method and drum for products in a packing machine, in particular packets of cigarettes in a cigarette packing machine, designed to reduce the stress caused by step-feeding the products.

According to the present invention, there are provided a wrapping method and drum for products in a packing machine as recited in claims 1 and 7 respectively.

### BRIEF DESCRIPTION OF THE DRAWINGS

The present invention will now be described by way of examples with reference to the accompanying drawings, in which:
Figure 1 shows a view in perspective of a first preferred embodiment of the drum according to the present invention;
Figures 2 to 6 show, schematically, the Figure 1 drum in respective different operating positions;
Figures 7 and 8 show respective operating graphs of a known drum; and
Figures 9 to 12 show respective operating graphs of the Figure 1 drum.

### BEST MODE FOR CARRYING OUT THE INVENTION

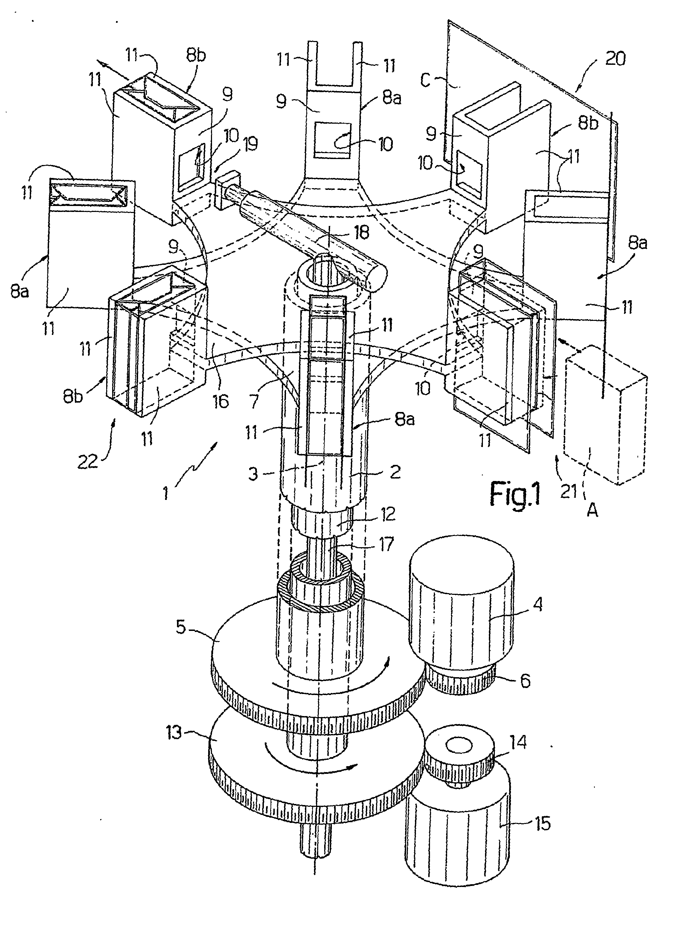

Number 1 in Figure 1 indicates as a whole a wrapping drum for products, in particular, packets A of cigarettes, of a packing machine B, in particular a cigarette packing machine or, as in the example shown in Figure 1, a cigarette cellophaning machine.

Packets A may be either the internal packet of a cardboard cigarette packet, and wrapping drum 1 is, in this case, a drum for wrapping a respective cardboard blank C about each packet A, or a finished cardboard cigarette packet, and wrapping drum 1 is, in this case, an over-wrapping drum for wrapping a respective transparent blank about each packet A.

Drum 1 comprises a tubular shaft 2 fitted to a frame (not shown) of packing machine B and rotated, anticlockwise in Figure 1, in steps about an axis 3 by a motor 4, which is connected angularly to tubular shaft 2 by a gear transmission comprising a gear 5 coaxial with axis 3 and fitted to a rear end portion of tubular shaft 2, and a pinion 6 fitted to an output shaft of motor 4.

At the opposite end to the one fitted with gear 5, tubular shaft 2 is fitted with a polygonal plate 7 perpendicular to axis 3 and supporting a number of (in the example shown, four) peripheral cup-shaped pockets 8, which are equally spaced about axis 3, project radially from plate 7 with their respective concavities facing outwards of plate 7, and are movable by motor 4 along a circular path P coaxial with axis 3.

Each pocket 8 is substantially parallelepiped-shaped, houses a respective packet A and comprises a rectangular end wall 9 connected at one end to the periphery of plate 7, and having a central opening 10 on the opposite side of plate 7 to tubular shaft 2. Each pocket 8 also comprises two opposite rectangular lateral walls 11 perpendicular to end wall 9.

Drum 1 also comprises a further tubular shaft 12 coaxial with axis 3, mounted to rotate inside and along tubular shaft 2, and having a rear portion projecting rearwards from tubular shaft 2 and fitted with a further gear 13, which faces gear 5 and meshes with a pinion 14, fitted to the output shaft of a motor 15, to rotate tubular shaft 12, anticlockwise in Figure 1, in steps about axis 3.

Tubular shaft 12 comprises a front portion projecting frontwards of tubular shaft 2 and plate 7, and fitted with a further plate 16, which is parallel to and substantially identical with plate 7, and supports peripheral pockets 8b, which are identical with and equal in number to pockets 8a, are equally spaced about axis 3, alternate with pockets 8a, and are movable by motor 15 along circular path P.

Drum 1 also comprises a fixed rod 17 coaxial with axis 3, mounted inside and along tubular shaft 12, and fitted, at its top end projecting frontwards of plate 16, with a linear push device 18, which is positioned crosswise to axis 3 and oriented to face an unloading station 19 where packets A are unloaded from pockets 8a and 8b. More specifically, push device 18 moves radially, with respect to axis 3, through opening 10 of a pocket 8a, 8b arrested at unloading station 19, to expel the relative packet A radially from pocket 8a, 8b.

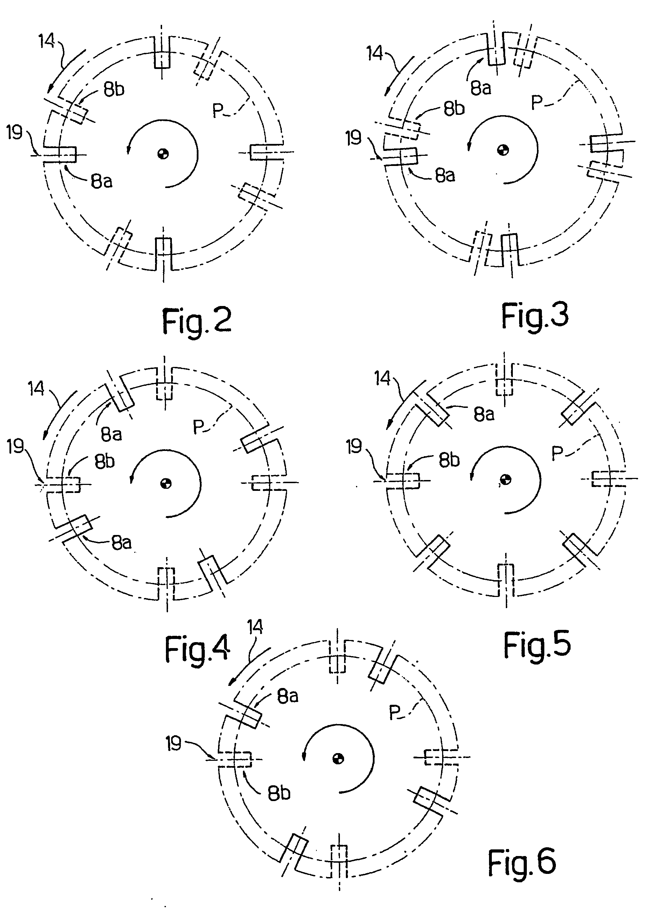

Operation of drum 1 will now be described with reference to Figures 2 to 6, in which pockets 8a are indicated by a continuous line, and pockets 8b by a dash line.

In actual use, motors 4 and 15 are operated to move pockets 8a and 8b of respective plates 7 and 16 in respective periodic movements, which are out of phase but have the same period, which comprises a stop phase of relative plate 7, 16 equal to a time interval Dt, and a continuous travel phase equal to a time interval which is a multiple of Dt (in the example shown, 3Dt) and corresponding to a step of plate 7, 16 in which plate 7, 16 rotates a given angle (90° in the example shown) equal to 360° divided by the number of pockets 8a, 8b on plate 7, 16.

With reference to figure 1, each pocket 8a, 8b is advanced along circular path P to stop, in succession, at a first loading station 20, where a blank C is fed, in a known manner, to the pocket 8a, 8b; at a second loading station 21, where a packet A is fed, in a known manner, to the pocket 8a, 8b and inserted into the same together with the relevant blank B; at a folding station 22, where blank C is folded about packet A; and at unloading station 19, where the wrapped packet A is unloaded by push device 18.

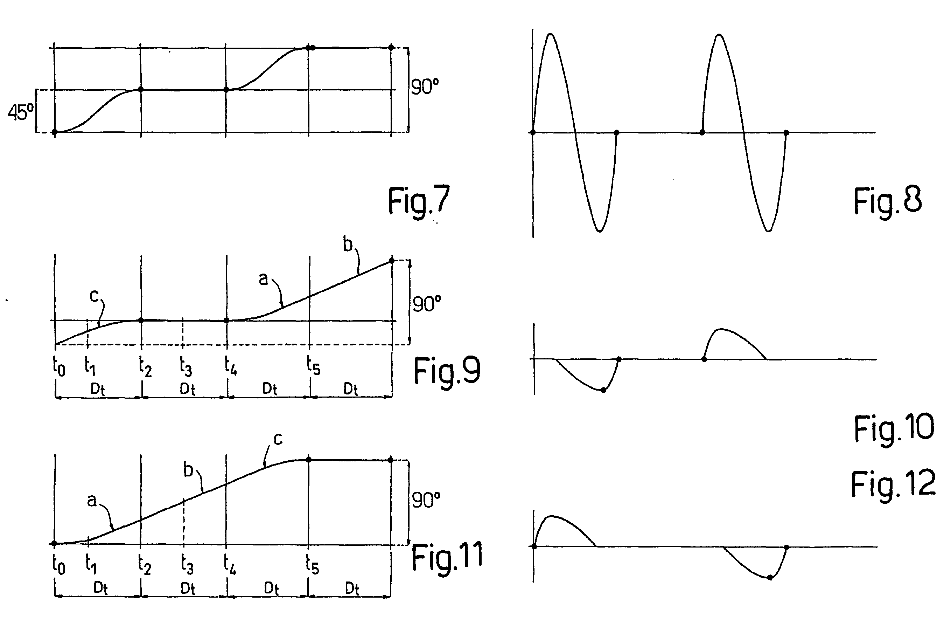

Figures 9 and 11 show time-travel graphs of pockets 8b and 8a respectively, relative to a time interval of one period. More specifically, the instants marked t0, t1, t2, t3, t4 correspond to the operating configurations shown in Figures 2, 3, 4, 5, 6 respectively; and instant t5 corresponds to an operating position similar to the one shown in Figure 2 but turned 90° anticlockwise.

Each travel phase of plate 7, 16 comprises a first, a second, and a third portion (indicated a, b, c respectively), each equal to a time interval Dt.

As shown in Figures 9 and 11, the phase difference in the periods of the two movements equals 2Dt, so that travel portion b of a pocket 8b corresponds to a stop phase of a pocket 8a, and travel portion b of a pocket 8a corresponds to a stop phase of a pocket 8b.

Consequently, travel portion a of a pocket 8a, i.e. pull-away of pocket 8a from a relative stop position, always corresponds to travel portion c of a pocket 8b, i.e. approach of pocket 8b to a relative stop position; and travel portion a of a pocket 8b always corresponds to travel portion c of a pocket 8a.

As shown in Figures 2 to 6, for example, as a pocket 8b nears unloading station 19 (travel portion c), a pocket 8a, located immediately downstream from pocket 8b, pulls away from unloading station 19 (travel portion a) and continues moving away (travel portion b) while pocket 8b remains stationary at unloading station 19.

The advantage of operating pockets 8a and 8b independently and out of phase with one another is obvious from a comparison of drum 1 with a known drum (not shown), the pockets of which number the sum of pockets 8a and 8b, are integral with one another, and are equally spaced along the periphery of the known drum.

For a given output rate of drum 1 and the known drum, and for a time interval equal to the period mentioned above, the time-travel graph of a pocket on the known drum would be as shown in Figure 7.

As can be seen from a comparison of Figures 9, 11 and Figure 7, within the time interval of one period, a pocket 8a or 8b performs a 90° angular displacement with only one stop of length Dt, whereas a pocket on the known drum performs the same angular displacement with two stops, each of a length Dt, alternating with two 45° angular displacements.

With reference to Figures 8, 10 and 12, in the course of a respective travel phase, acceleration of a pocket 8a, 8b (Figures 10 and 12) is therefore roughly a third of that of a pocket on the known drum (Figure 8). Consequently, inertial stress of drum 1, which is proportional to acceleration, is also reduced to roughly a third of that of the known drum.

## Claims

1. A wrapping method for products (A), the method comprising the steps of:
inserting the products (A) and respective wrapping material (C) inside respective pockets (8a, 8b) equally spaced along a given wrapping path (P) extending through a number of operating stations (19-22); and
feeding the pockets (8a, 8b) in steps along the wrapping path (P);
the method is **characterized in that** comprising the further steps of:
dividing the pockets (8a, 8b) into at least two separate successions of first and second pockets (8a, 8b) respectively, with the first pockets (8a) alternating with the second pockets (8b), the pockets (8a; 8b) in each succession being integral with one another, and the pockets (8a; 8b) in each succession being independent of the pockets (8b; 8a) in the other succession; and
feeding the pockets (8a, 8b) in the two successions along said wrapping path (P) in respective periodic movements, which have the same period, and are out of phase, so that, when the pockets (8a; 8b) in one of the two successions are stopped, the pockets (8b; 8a) in the other succession are moving.

2. A method as claimed in Claim 1, wherein said successions are activated by respective actuating means (4, 5, 6; 13, 14, 15), each comprising a respective motor (4; 15); the motors (4, 15) being operated independently of each other.

3. A method as claimed in claim 1 or 2, wherein said wrapping path (P) is a circular path extending about an axis (3); said successions of pockets (8a, 8b) being fed along said wrapping path (P) by rotating the pockets (8a, 8b) in steps about said axis (3).

4. A method as claimed in any one of Claims 1 to 3, wherein each step is a continuous step comprising a first, second, and a third travel portion; a stop of the pockets (8a; 8b) in one succession coinciding with the the pockets (8a; 8b) in one succession coinciding with the second travel portion of the pockets (8b; 8a) in the other succession.

5. A method as claimed in Claim 4, wherein the first and the third travel portion of the pockets (8a; 8b) in one of the two successions correspond respectively, to the third and the first travel portion of the pockets (8b; 8a) in the other succession.

6. A method as claimed in claim 5, wherein the pockets (8a; 8b) in each succession are positioned in respective stop positions at the end of each step and at one of said operating stations (19-22); the first and the third travel portion of each pockets (8a; 8b) being, respectively, a pull-away movement and an approach movement of the pockets (8a; 8b) from and to the relative said stop position.

7. A wrapping drum for products (A); the drum (1) having an axis (3) of rotation, and comprising a first ring of peripheral radial first pockets (8a) integral with one another, equally spaced about said axis (3) of rotation, and for housing respective products (A) and respective wrapping material (C);
the drum (1) is **characterized in** comprising:
at least a second ring of peripheral radial second pockets (8b), which are integral with one another, are designed for housing respective products (A) and respective wrapping material (C), are equally spaced about said axis (3) with the same spacing as the first pockets (8a), and are alternating with the first pockets (8a);
first actuating means (4, 5, 6) for moving the first pockets (8a) about said axis (3) in a first periodic movement, a period of which comprises a stop phase and a travel phase of the first pockets (8a) in a given direction along a circular path (P) coaxial with said axis (3) and extending through a number of operating stations (19-22); and
second actuating means (13, 14, 15) for moving the second pockets (8b) about said axis (3) in a second periodic movement, which is identical with the first periodic movement but out of phase with respect to the first periodic movement, so that, when the pockets (8a; 8b) in one of the two rings are stopped, the pockets (8b; 8a) in the other ring are moving.

8. A drum as claimed in Claim 7, wherein said first and said second actuating means (4, 5, 6; 13, 14, 15) are independent of one another.

9. A drum as claimed in Claim 7 or 8, wherein said first and said second actuating means (4, 5, 6; 13, 14, 15) comprise a first and a second motor (4; 7.5) respectively.

10. A drum as claimed in Claim 9, and comprising a first and a second shaft (2, 12) coaxial with each other and with said axis (3) of rotation; each shaft (2; 12) being connected angularly on one side to the respective motor (4; 15), and on the other side to the respective ring of pockets (8a; 8b).

## Patentansprüche

1. Einwickelverfahren für Produkte (A), wobei das Verfahren die folgenden Schritte umfasst:
Einsetzen der Produkte (A) und entsprechendes Einwickelmaterial (C) in entsprechenden Taschen (8a, 8b), die längs eines gegebenen Einwickelpfades (P), der durch eine Anzahl von Arbeitsstationen (19-22) verläuft, gleichmäßig beabstandet sind; und
Zuführen der Taschen (8a, 8b) in Schritten längs des Einwickelpfades (P);
wobei das Verfahren **dadurch gekennzeichnet ist, dass** es die folgenden weiteren Schritte umfasst:
Unterteilen der Taschen (8a, 8b) in wenigstens zwei getrennte Abfolgen aus ersten bzw. zweiten Taschen (8a, 8b), wobei die ersten Taschen (8a) mit den zweiten Taschen (8b) abwechseln, wobei die Taschen (8a; 8b) in jeder Abfolge einteilig miteinander ausgebildet sind und die Taschen (8a; 8b) in jeder Abfolge von den Taschen (8b; 8a) in der anderen Abfolge unabhängig sind; und
Zuführen der Taschen (8a, 8b) in den zwei Abfolgen längs des Einwickelpfades (P) in jeweiligen periodischen Bewegungen, die dieselbe Periode haben und phasenverschoben sind, so dass dann, wenn die Taschen (8a; 8b) in einer der Abfolgen stillstehen, die Taschen (8b; 8a) in der anderen Abfolge sich bewegen.

2. Verfahren nach Anspruch 1, wobei die Abfolgen durch jeweilige Betätigungsmittel (4, 5, 6; 13, 14, 15), die jeweils einen entsprechenden Motor (4; 15) enthalten, aktiviert werden; wobei die Motoren (4, 15) unabhängig voneinander betätigt werden.

3. Verfahren nach Anspruch 1 oder 2, wobei der Einwickelpfad (P) ein kreisförmiger Pfad ist, der um eine Achse (3) verläuft; wobei die Abfolgen von Taschen (8a, 8b) längs des Einwickelpfades (P) durch schrittweises Drehen der Taschen (8a, 8b) um die Achse (3) zugeführt werden.

4. Verfahren nach einem der Ansprüche 1 bis 3, wobei jeder Schritt ein kontinuierlicher Schritt ist, der einen ersten, einen zweiten und einen dritten Bewegungsabschnitt umfasst; wobei ein Stillstand der Taschen (8a; 8b) in einer Abfolge mit dem zweiten Bewegungsabschnitt der Taschen (8b; 8a) in der anderen Abfolge übereinstimmt.

5. Verfahren nach Anspruch 4, wobei der erste und der dritte Bewegungsabschnitt der Taschen (8a; 8b) in einer der zwei Abfolgen dem dritten bzw. dem ersten Bewegungsabschnitt der Taschen (8b; 8a) in der anderen Abfolge entspricht.

6. Verfahren nach Anspruch 5, wobei die Taschen (8a; 8b) in jeder Abfolge in jeweiligen Stillstandspositionen am Ende jedes Schrittes und in einer der Arbeitsstationen (19-22) positioniert werden; wobei der erste und der dritte Bewegungsabschnitt jeder Tasche (8a; 8b) eine Wegziehbewegung bzw. eine Annäherungsbewegung der Tasche (8a; 8b) aus der bzw. zu der relativen Stillstandsposition ist.

7. Einwickeltrommel für Produkte (A); wobei die Trommel (1) eine Drehachse (3) besitzt und einen ersten Ring aus radialen ersten Umfangstaschen (8a), die einteilig miteinander ausgebildet sind und um die Drehachse (3) gleichmäßig beabstandet sind, umfasst, um jeweilige Produkte (A) und jeweiliges Einwickelmaterial (C) aufzunehmen;
wobei die Trommel (1) **dadurch gekennzeichnet ist, dass** sie umfasst:
wenigstens einen zweiten Ring aus radialen zweiten Umfangstaschen (8b), die einteilig miteinander ausgebildet sind, entworfen sind, um jeweilige Produkte (A) und jeweiliges Einwickelmaterial (C) aufzunehmen, um die Achse (3) mit dem gleichen Abstand wie die ersten Taschen (8a) gleichmäßig beabstandet sind und mit den ersten Taschen (8a) abwechseln;
erste Betätigungsmittel (4, 5, 6), um die ersten Taschen (8a) um die Achse (3) in einer ersten periodischen Bewegung zu bewegen, wobei eine Periode hiervon eine Stillstandsphase und eine Bewegungsphase der ersten Taschen (8a) in einer gegebenen Richtung längs eines zu der Achse (3) koaxialen kreisförmigen Pfades (P), der durch eine Anzahl von Arbeitsstationen (19-22) verläuft, umfasst; und
zweite Betätigungsmittel (13, 14, 15), um die zweiten Taschen (8b) um die Achse (3) in einer zweiten periodischen Bewegung zu bewegen, die mit der ersten periodischen Bewegung übereinstimmt, jedoch zu der ersten periodischen Bewegung phasenverschoben ist, so dass dann, wenn die Taschen (8a; 8b) in einem der zwei Ringe stillstehen, die Taschen (8b; 8a) im anderen Ring sich bewegen.

8. Trommel nach Anspruch 7, wobei die ersten und die zweiten Betätigungsmittel (4, 5, 6; 13, 14, 15) voneinander unabhängig sind.

9. Trommel nach Anspruch 7 oder 8, wobei die ersten und die zweiten Betätigungsmittel (4, 5, 6; 13, 14, 15) einen ersten bzw. einen zweiten Motor (4; 15) umfassen.

10. Trommel nach Anspruch 9, die eine erste und eine zweite Welle (2, 12) umfasst, die zueinander und zu der Drehachse (3) koaxial sind; wobei jede Welle (2; 12) in Winkelrichtung auf einer Seite mit dem entsprechenden Motor (4; 15) und auf der anderen Seite mit dem entsprechenden Ring von Taschen (8a; 8b) verbunden ist.

## Revendications

1. Procédé d'enveloppement pour produits (A), le procédé comprenant les étapes consistant à :
insérer les produits (A) et le matériau d'enveloppement respectif (C) à l'intérieur de poches respectives (8a, 8b) également espacées le long d'un trajet d'enveloppement donné (P) s'étendant à travers un certain nombre de stations opérationnelles (19 à 22) ; et
délivrer les poches (8a, 8b) par pas le long du trajet d'enveloppement (P) ;
le procédé étant **caractérisé en ce qu'**il comprend les étapes additionnelles consistant à :
diviser les poches (8a, 8b) en au moins deux successions séparées de premières et deuxièmes poches (8a, 8b), respectivement, les premières poches (8a) alternant avec les deuxièmes poches (8b), les poches (8a ; 8b) dans chaque succession étant intégrées les unes aux autres, et les poches (8a ; 8b) dans chaque succession étant indépendantes des poches (8b ; 8a) dans l'autre succession ; et
délivrer les poches (8a, 8b) dans les deux successions le long dudit trajet d'enveloppement (P) dans des mouvements périodiques respectifs, qui ont la même période, et qui sont déphasés, de telle sorte que, lorsque les poches (8a ; 8b) dans l'une des deux successions sont arrêtées, les poches (8b ; 8a) dans l'autre succession se déplacent.

2. Procédé selon la revendication 1, dans lequel lesdites successions sont activées par des moyens d'actionnement respectifs (4, 5, 6 ; 13, 14, 15), comprenant chacun un moteur respectif (4 ; 15) ; les moteurs (4, 15) étant actionnés indépendamment l'un de l'autre.

3. Procédé selon la revendication 1 ou 2, dans lequel ledit trajet d'enveloppement (P) est un trajet circulaire s'étendant autour d'un axe (3) ; lesdites successions de poches (8a, 8b) étant délivrées le long dudit trajet d'enveloppement (P) par la rotation des poches (8a, 8b) par pas autour dudit axe (3).

4. Procédé selon l'une quelconque des revendications 1 à 3, dans lequel chaque pas est un pas continu comprenant une première, une deuxième et une troisième partie de déplacement ; un arrêt des poches (8a ; 8b) dans une succession coïncidant avec la deuxième partie de déplacement des poches (8b ; 8a) dans l'autre succession.

5. Procédé selon la revendication 4, dans lequel la première et la troisième partie de déplacement des poches (8a ; 8b) dans l'une des deux successions correspondent, respectivement, à la troisième et à la première partie de déplacement des poches (8b ; 8a) dans l'autre succession.

6. Procédé selon la revendication 5, dans lequel les poches (8a ; 8b) dans chaque succession sont positionnées dans des positions d'arrêt respectives à la fin de chaque pas et à l'une desdites stations opérationnelles (19 à 22) ; la première et la troisième partie de déplacement de chaque poche (8a ; 8b) étant, respectivement, un mouvement de retrait et un mouvement d'approche de la poche (8a ; 8b) depuis et vers ladite position d'arrêt relative.

7. Tambour d'enveloppement pour produits (A), le tambour (1) comportant un axe (3) de rotation, et comprenant un premier anneau de premières poches radiales périphériques (8a) intégrées les unes aux autres, également espacées autour dudit axe (3) de rotation, et servant à renfermer des produits respectifs (A) et un matériau d'enveloppement respectif (C) ;
le tambour (1) étant **caractérisé en ce qu'**il comprend :
au moins un deuxième anneau de deuxièmes poches radiales périphériques (8b), qui sont intégrées les unes aux autres, qui sont conçues pour renfermer des produits respectifs (A) et un matériau d'enveloppement respectif (C), qui sont également espacées autour dudit axe (3) avec le même espacement que les premières poches (8a), et qui alternent avec les premières poches (8a) ;
des premiers moyens d'actionnement (4, 5, 6) pour déplacer les premières poches (8a) autour dudit axe (3) dans un premier mouvement périodique, dont une période comprend une phase d'arrêt et une phase de déplacement des premières poches (8a) dans une direction donnée le long d'un trajet circulaire (P) coaxial audit axe (3) et s'étendant à travers un certain nombre de stations opérationnelles (19 à 22) ; et
des deuxièmes moyens d'actionnement (13, 14, 15) pour déplacer les deuxièmes poches (8b) autour dudit axe (3) dans un deuxième mouvement périodique, qui est identique au premier mouvement périodique mais déphasé par rapport au premier mouvement périodique, de telle sorte que, lorsque les poches (8a ; 8b) dans l'un des deux anneaux sont arrêtées, les poches (8b ; 8a) dans l'autre anneau se déplacent.

8. Tambour selon la revendication 7, dans lequel lesdits premiers et lesdits deuxièmes moyens d'actionnement (4, 5, 6 ; 13, 14, 15) sont indépendants les uns des autres.

9. Tambour selon la revendication 7 ou 8, dans lequel lesdits premiers et lesdits deuxièmes moyens d'actionnement (4, 5, 6 ; 13, 14, 15) comprennent un premier et un deuxième moteurs (4 ; 15), respectivement.

10. Tambour selon la revendication 9, et comprenant un premier et un deuxième arbre (2, 12) coaxiaux l'un par rapport à l'autre et par rapport audit axe (3) de rotation ; chaque arbre (2 ; 12) étant relié de façon angulaire sur un côté au moteur respectif (4 ; 15), et sur l'autre côté à l'anneau respectif de poches (8a ; 8b).
